# EUROPEAN PATENT SPECIFICATION

(11) **EP 4 218 943 B1**
(45) Date of publication and mention of the grant of the patent: **09.07.2025**
(21) Application number: 23153448.8
(22) Date of filing: 26.01.2023
(51) Int. Cl.: A62B 18/10

(54) **VALVE FOR RESPIRATORY MASK**
VENTIL FÜR ATEMMASKE
VALVE POUR MASQUE RESPIRATOIRE

(30) Priority: 26.01.2022 US 202263303213 P
(43) Date of publication of application: 02.08.2023
(73) Proprietor: 3M Innovative Properties Company, St. Paul, MN 55133-3427 (US)
(72) Inventor: LEWIN, Barry, Skelmersdale (GB)
(74) Representative: Mathys & Squire

(56) References cited:
- EP-A1- 0 566 400
- WO-A1-2019/093854
- DE-B- 1 055 969
- US-A- 4 007 758
- US-A- 5 662 142

## Description

### Technical Field

The present disclosure relates generally to a respiratory mask, and in particular to a valve for a respiratory mask.

### Background

Respirators are used in contaminated environments where air cannot be inhaled directly because the air may be noxious and/or contain harmful gases or substances. A respirator typically comprises a positive pressure mask which seals around a face of a wearer to define a mask space between the positive pressure mask and the face of the wearer. The wearer inhales the air from the mask space. The positive pressure mask further includes an inlet for introducing breathable air into the mask space and an outlet for ensuring air exhaled by the wearer is expelled from the mask space. The air supply may be sourced from a pressurized air cylinder via one or more filters.

The outlet is usually in the form of a one-way exhalation valve which opens in response to a raised pressure within the mask space because of exhalation and which closes again as the pressure within the mask space lowers. In the positive pressure mask, the mask space is usually maintained at a positive pressure, i.e., a pressure slightly higher than atmospheric pressure, to ensure any leakage around a face seal of the mask is outwards to the environment rather than into the mask space. The positive pressure in the mask space may therefore require that a cracking or an opening pressure of the exhalation valve is also higher than atmosphere pressure. The exhalation valve therefore allows the exhaled air to be rapidly purged from the mask space.

A combined speech diaphragm and exhalation valve for a respirator is provided in EP 0 566 400. The combined speech diaphragm and exhalation valve includes an annular valve body having a central aperture and providing a valve seat for an annular valve member and an annular support member carrying said valve member. The combined speech diaphragm and exhalation valve further includes a speech diaphragm supported within the annular support member. The annular support member is attached to one end of an armature shaft to be supported by the armature shaft. The annular valve member is supported on said annular support member through the inner periphery of said valve member. A coil spring acts to urge the valve to a closed position, one end of the spring being supported in the valve body or in a frontal cap attached to the body through radially inwardly extending support fingers.

A pressure-demand exhalation valve for a respirator facepiece is provided in US 4 007 758. A chamber in a valve case has an inlet port of exhaled air in one of its end walls. Spaced inwardly from the side wall of the chamber is a valve seat surrounding the inlet port and engaged by one side of a sealing member, the opposite side of which is engaged by a rigid disc secured to a valve stem that extends through the port and into guiding means for the stem. A spring in the case is compressed between the disc and the other end wall of the valve chamber for pressing the sealing member against the seat. The disc is spaced from the ported wall of the chamber far enough for the marginal portion of the disc that extends laterally out beyond the sealing member to be inclined toward the ported wall but spaced from it.

An air intake device for a gas mask canister is provided in WO 2019/093854. The intake device includes an intake valve which is mounted between a gas mask and a canister; a curved intake membrane which is supported by the intake valve, has self-recovery capability, and opens and closes the intake valve while being deformed by an external pressure; a check rod which is moved up and down by the intake membrane; and an elastic member which is disposed around the check rod so as to elastically support the check rod and the intake valve.

A circular valve flapper for a unidirectional gas flow system is provided in US 4 007 758. The circular valve flapper has a central support and an edge seal adapted to bear against a valve seat to stop the flow and retract from the valve seat to permit flow. The flapper includes four concentric annular bands, the first being continuous with the support. The first and third bands are readily deflectable, and the second and fourth bands are relatively stiff. One, and preferably both, of the first and third bands are rolling diaphragms. The readily deflectibility of the first and third bands results in a substantial axial deflection of the edge seal, and a reduction of low frequency noise.

An exhalation valve for breathing masks is provided in DE 1 055 969. The exhalation valve includes a centrally fastened valve disc consisting of elastic material, such as rubber, plastic or the like. The valve disc is constructed between its outer edge and a reinforced central part over its entire length as a truncated cone casing.

### Summary

In a first aspect, the present disclosure provides a valve for a respiratory mask. The valve includes a valve housing including a valve seat and an inlet. The valve further includes a valve flap at least partially received within the valve housing. The valve flap is sealingly engaged with the valve seat in a closed configuration and is disengaged from the valve seat in a plurality of open configurations. The valve flap includes a tubular projection extending away from the valve seat along a longitudinal axis. The plurality of open configurations includes a first open configuration and a second open configuration. The valve further includes a pin slidably received through the valve housing and coupled to the tubular projection. The pin and the valve flap are together movable along the longitudinal axis relative to the valve seat. The valve further includes a valve cage coupled to the valve housing. The valve further includes a central limiter coupled to the valve cage and extending towards the tubular projection along the longitudinal axis. The valve further includes a cap disposed on the valve flap opposite to the valve seat. The cap is engaged with the valve flap and movable along the longitudinal axis. The valve further includes a biasing member disposed between and engaged with the cap and the valve cage. The biasing member is configured to normally bias, via the cap, the valve flap to the closed configuration. In response to an inlet pressure applied at the inlet of the valve housing, the valve flap moves linearly, along the longitudinal axis, from the closed configuration to the first open configuration against the biasing of the biasing member. The linear movement of the valve flap from the closed configuration to the first open configuration causes a corresponding linear movement of the cap along the longitudinal axis. In the first open configuration of the valve flap, the central limiter engages with the tubular projection to prevent further movement of the tubular projection along the longitudinal axis, such that the valve flap transitions, in response to the inlet pressure, from the first open configuration to the second open configuration in order to remain disengaged from the valve seat. The valve flap at least partially deforms to transition from the first open configuration to the second open configuration.

In a second aspect, the present disclosure provides a respiratory mask. The respiratory mask includes a seal for sealing against and around a face of a wearer. The respiratory mask further includes a mask inlet adapted to be placed in fluid communication with a supply of air. The respiratory mask further includes a mask outlet through which a wearer's exhaled breath is emitted. The respiratory mask further includes a valve fluidly disposed in the mask outlet. The valve includes a valve housing including a valve seat and an inlet. The inlet is configured to receive the wearer's exhaled breath at an inlet pressure. The valve further includes a valve flap at least partially received within the valve housing. The valve flap is sealingly engaged with the valve seat in a closed configuration and is disengaged from the valve seat in a plurality of open configurations. The valve flap includes a tubular projection extending away from the valve seat along a longitudinal axis. The plurality of open configurations includes a first open configuration and a second open configuration. In each of the plurality of open configurations, the valve is configured to allow discharge of fluid through the mask outlet. The valve further includes a pin slidably received through the valve housing and coupled to the tubular projection. The pin and the valve flap are together movable along the longitudinal axis relative to the valve seat. The valve further includes a valve cage coupled to the valve housing. The valve further includes a central limiter coupled to the valve cage and extending towards the tubular projection along the longitudinal axis. The valve further includes a cap disposed on the valve flap opposite to the valve seat. The cap is engaged with the valve flap and movable along the longitudinal axis. The valve further includes a biasing member disposed between and engaged with the cap and the valve cage. The biasing member is configured to normally bias, via the cap, the valve flap to the closed configuration. **In** response to the inlet pressure at the inlet of the valve housing, the valve flap moves linearly, along the longitudinal axis, from the closed configuration to the first open configuration against the biasing of the biasing member. The linear movement of the valve flap from the closed configuration to the first open configuration causes a corresponding linear movement of the cap along the longitudinal axis. **In** the first open configuration of the valve flap, the central limiter engages with the tubular projection to prevent further movement of the tubular projection along the longitudinal axis, such that the valve flap transitions, in response to the inlet pressure, from the first open configuration to the second open configuration in order to remain disengaged from the valve seat. The valve flap at least partially deforms to transition from the first open configuration to the second open configuration.

In a third aspect, the present disclosure provides a valve for a respiratory mask. The valve includes a valve flap configured to prevent fluid flow through the valve in a closed configuration. The valve flap is further configured to allow fluid flow through the valve in each of a first open configuration and a second open configuration. The valve flap includes a tubular projection extending along a longitudinal axis. The valve further includes a central limiter extending towards the tubular projection along the longitudinal axis. The central limiter is stationary within the valve. The valve further includes a biasing member configured to normally bias the valve flap to the closed configuration. In response to an inlet pressure applied on the valve, the valve flap moves linearly, along the longitudinal axis, from the closed configuration to the first open configuration against the biasing of the biasing member. In the first open configuration of the valve flap, the central limiter engages with the tubular projection to prevent further movement of the tubular projection along the longitudinal axis, such that the valve flap transitions, in response to the inlet pressure, from the first open configuration to the second open configuration in order to allow fluid flow through the valve. In response to the inlet pressure, at least a portion of the valve flap deforms and moves non-linearly during the transition of the valve flap from the first open configuration to the second open configuration, such that an excitation frequency of the valve due to the inlet pressure changes and becomes different from a natural frequency of the valve.

The details of one or more examples of the disclosure are set forth in the accompanying drawings and the description below. Other features, objects, and advantages of the disclosure will be apparent from the description and drawings, and from the claims.

### Brief Description of the Drawings

Exemplary embodiments disclosed herein may be more completely understood in consideration of the following detailed description in connection with the following figures. The figures are not necessarily drawn to scale. Like numbers used in the figures refer to like components. However, it will be understood that the use of a number to refer to a component in a given figure is not intended to limit the component in another figure labeled with the same number.
FIG. 1 is a perspective view of a respiratory mask, according to an embodiment of the present disclosure;
FIGS. 2A and 2B are partial side views of the respiratory mask of FIG. 1, according to an embodiment of the present disclosure;
FIG. 3 is a perspective view of a valve of the respiratory mask of FIG. 2A, according to an embodiment of the present disclosure;
FIG. 4 is a sectional front view of the valve of FIG. 3, according to an embodiment of the present disclosure;
FIG. 5 is an exploded view of the valve of FIG. 3, according to an embodiment of the present disclosure;
FIG. 6 is a perspective view of a valve flap of the valve of FIG. 5, according to an embodiment of the present disclosure;
FIG. 7 is a perspective view of a cap of the valve of FIG. 5, according to an embodiment of the present disclosure;
FIG. 8 is a sectional front view of the valve of FIG. 3 in a closed configuration of the valve flap, according to an embodiment of the present disclosure;
FIG. 9 is a sectional front view of the valve of FIG. 3 in a first open configuration of the valve flap, according to an embodiment of the present disclosure;
FIG. 10 is a sectional front view of the valve of FIG. 3 in a second open configuration of the valve flap, according to an embodiment of the present disclosure;
FIG. 11 illustrates the valve flap in the closed, first open, and second open configurations, according to an embodiment of the present disclosure;
FIG. 12 is a graph illustrating a plot between facepiece pressure and time, according to an exemplary embodiment of the present disclosure; and
FIG. 13 is another graph illustrating a plot between facepiece pressure and time, according to an exemplary embodiment of the present disclosure.

### Detailed Description

In the following description, reference is made to the accompanying figures that form a part thereof and in which various embodiments are shown by way of illustration.

In the following disclosure, the following definitions are adopted.

As used herein, all numbers should be considered modified by the term "about". As used herein, "a," "an," "the," "at least one," and "one or more" are used interchangeably.

As used herein as a modifier to a property or attribute, the term "generally", unless otherwise specifically defined, means that the property or attribute would be readily recognizable by a person of ordinary skill but without requiring absolute precision or a perfect match (e. g., within +/- 20 % for quantifiable properties).

The term "about", unless otherwise specifically defined, means to a high degree of approximation (e. g., within +/- 5 % for quantifiable properties) but again without requiring absolute precision or a perfect match.

As used herein, the terms "first" and "second" are used as identifiers. Therefore, such terms should not be construed as limiting of this disclosure. The terms "first" and "second" when used in conjunction with a feature or an element can be interchanged throughout the embodiments of this disclosure.

As used herein, "at least one of A and B" should be understood to mean "only A, only B, or both A and B".

As used herein, the term "hazardous or potentially hazardous environmental conditions" may refer to environmental conditions that may be harmful to a human being, such as high noise levels, high ambient temperatures, lack of oxygen, presence of explosives, exposure to radioactive or biologically harmful materials, and exposure to other hazardous substances. Depending upon the type of safety equipment, environmental conditions and physiological conditions, corresponding thresholds or levels may be established to help define hazardous and potentially hazardous environmental conditions.

As used herein, the term "hazardous or potentially hazardous environments" may refer to environments that include hazardous or potentially hazardous environmental conditions. The hazardous or potentially hazardous environments may include, for example, chemical environments, biological environments, nuclear environments, fires, industrial sites, construction sites, agricultural sites, mining sites, or manufacturing sites.

As used herein, the term "an article of personal protective equipment (PPE)" may include any type of equipment or clothing that may be used to protect a user from hazardous or potentially hazardous environmental conditions. In some examples, one or more individuals, such as the users, may utilize the article of PPE while engaging in tasks or activities within the hazardous or potentially hazardous environment. Examples of the articles of PPE may include, but are not limited to, respiratory protection equipment (including disposable respirators, reusable respirators, powered air purifying respirators, self-contained breathing apparatus and supplied air respirators), facemasks, and any other suitable gear configured to protect the users from injury.

As used herein, the term "integral" means that the parts in are joined together as a single continuous part and are not separated from each other by other structures.

As used herein, the term "contaminants" refers to gases, vapors, and particles (including dusts, mists, and fumes) and/or other substances which may be present in air and may be harmful to a person..

As used herein, the term "exhaled breath" is air that is exhaled by a wearer wearing a respiratory mask.

As used herein, the term "exhalation valve" refers to a valve that is adapted for use on a respiratory mask to allow a fluid to exit an interior gas space of the respiratory mask when the valve is operatively disposed on the respiratory mask.

As used herein, the term "valve flap" refers to a sheet-like article that is capable of bending or flexing in response to a force exerted from a moving fluid.

As used herein, the term "unidirectional valve" refers to a valve that allows a fluid to pass through it in one direction but not the other.

The present disclosure relates to a valve for a respiratory mask. The respiratory mask may be a positive pressure mask. Further, the respiratory mask may be a part of an article of personal protective equipment (PPE), such as a respiratory protective equipment (RPE), a self-contained breathing apparatus (SCBA), a powered air purifying respirator (PAPR), a supplied air respirator (SAR), a pressure-demand supplied air respirator (PDSAR), and the like. The respiratory mask may be used in hazardous environmental conditions.

In some applications, an excitation frequency of an exhalation valve of a respiratory mask (e. g., a positive pressure full face mask) may be same at its natural frequency during an exhalation cycle (i. e., when a wearer exhales). The excitation of the exhalation valve at the natural frequency may lead to excessive fluttering in the exhalation valve. The excessive fluttering may cause discomfort to the wearer wearing the respiratory mask. In other words, the excessive fluttering in the exhalation valve may be annoying for the wearer. The excessive fluttering is more prominent around exhalation pressures generated during a speech of the wearer.

Further, the fluttering in the exhalation valve may occur predominantly around pressures generated during normal breathing. This does not conform to protocols of safety standards, such as EN 136, EN 137 which list the requirements of respiratory protective devices. Moreover, in some applications, for conventional respiratory masks, upon plotting a graph between facepiece pressure (i. e., a pressure inside the respiratory mask maintained by a demand valve) and time during normal breathing, many pressure peaks (i. e., excessive fluttering) or sharp peaks may be noticed in an exhale side of the graph because of the excessive fluttering in the exhalation valve. Presence of such sharp peaks in the exhale side may lead to discomfort for the wearer donning the respiratory mask.

One of the conventional techniques for reducing the fluttering in the exhalation valve comprises a use of two valve flaps (instead of a single valve flap) in total. The two valve flaps are arranged in such a way that the fluttering is reduced by damping vibrations produced in the exhalation valve during the exhalation cycle. However, a design of the exhalation valve comprising the two valve flaps is non-compliant with breathing resistance requirements in accordance with the safety standards.

Another conventional technique for reducing the fluttering in the exhalation valve proposes to increase a size of the exhalation valve. However, due to compact design requirements of the respiratory mask, the size of the exhalation valve cannot be increased to such an extent which can be useful in limiting the fluttering in the exhalation valve. Moreover, considering the compact design requirements, it may also be difficult to increase a size of a valve seat of the exhalation valve to reduce the fluttering.

Another conventional technique for reducing the fluttering in the exhalation valve proposes to adjust natural frequency of the exhalation valve. The natural frequency of the exhalation valve can be adjusted by varying characteristics of a biasing member. On one hand, with a low strength biasing member, the fluttering may further increase causing the discomfort to the wearer. On the other hand, with a high strength biasing member, the breathing resistance requirements may not be acceptable in accordance with the safety standards.

The present disclosure provides a valve for a respiratory mask. The valve includes a valve housing including a valve seat and an inlet. The valve further includes a valve flap at least partially received within the valve housing. The valve flap is sealingly engaged with the valve seat in a closed configuration and is disengaged from the valve seat in a plurality of open configurations. The valve flap includes a tubular projection extending away from the valve seat along a longitudinal axis. The plurality of open configurations includes a first open configuration and a second open configuration. The valve further includes a pin slidably received through the valve housing and coupled to the tubular projection. The pin and the valve flap are together movable along the longitudinal axis relative to the valve seat. The valve further includes a valve cage coupled to the valve housing. The valve further includes a central limiter coupled to the valve cage and extending towards the tubular projection along the longitudinal axis. The valve further includes a cap disposed on the valve flap opposite to the valve seat. The cap is engaged with the valve flap and movable along the longitudinal axis. The valve further includes a biasing member disposed between and engaged with the cap and the valve cage. The biasing member is configured to normally bias, via the cap, the valve flap to the closed configuration. In response to an inlet pressure applied at the inlet of the valve housing, the valve flap moves linearly, along the longitudinal axis, from the closed configuration to the first open configuration against the biasing of the biasing member. The linear movement of the valve flap from the closed configuration to the first open configuration causes a corresponding linear movement of the cap along the longitudinal axis. In the first open configuration of the valve flap, the central limiter engages with the tubular projection to prevent further movement of the tubular projection along the longitudinal axis, such that the valve flap transitions, in response to the inlet pressure, from the first open configuration to the second open configuration in order to remain disengaged from the valve seat. The valve flap at least partially deforms to transition from the first open configuration to the second open configuration.

In some cases, the valve may be an exhalation valve in the respiratory mask. Due to the at least partial deformation of the valve flap during the transition from the first open configuration to the second open configuration, at least a portion of the valve flap moves non-linearly during the transition of the valve flap from the first open configuration to the second open configuration. Due to the non-linear movement of at least the portion of the valve flap, an excitation frequency of the valve due to the inlet pressure is different from a natural frequency of the valve. This prevents the valve from exciting at the natural frequency during an exhalation cycle. As the valve is not excited at its natural frequency, the fluttering in the valve may be reduced. The reduced fluttering may further provide an improved comfort to a wearer donning the respiratory mask. Moreover, in contrast to some conventional positive pressure respiratory masks, the respiratory mask of the present disclosure may not be annoying for the wearer because of the reduced fluttering in the valve (i. e., the exhalation valve).

For the respiratory mask including the valve of the present disclosure, upon plotting the graph between the facepiece pressure and time during normal breathing, there are no sharp pressure peaks in the exhale side of the graph. Absence of sharp pressure peaks in the exhale side signifies the reduced fluttering in the valve and may therefore lead to improved comfort for the wearer donning the respiratory mask. For reducing the fluttering in the valve, the valve of the present disclosure includes only one valve flap in contrast to some conventional valves including two valve flaps. In other words, excessive vibrations may be damped in the valve by using only one valve flap. Moreover, to reduce the fluttering in the valve, the use of only one valve flap may reduce a cost of manufacturing the valve as compared to conventional valves having two valve flaps. The valve of the present disclosure is also compliant with the breathing resistance requirements in accordance with the safety standards.

In contrast to a conventional technique for reducing the fluttering in a valve by increasing a size of the valve, there is no requirement for increasing a size of any component in the valve of the present disclosure. Therefore, while reducing the fluttering in the valve of the present disclosure, compact design requirements of the respirator mask may also be met. This may further reduce a complexity in designing the valve for the respiratory mask.

In contrast to another conventional technique for reducing the fluttering in a valve by adjusting characteristics of a biasing member, there is no need to adjust the characteristics of the biasing member for reducing the fluttering in the valve of the present disclosure. In other words, to achieve the reduced fluttering in the valve, there may be no requirement to have the biasing member with a relatively lower strength or a relatively higher strength. Therefore, while providing an adequate strength of the biasing member, the proposed valve may have the reduced fluttering along with acceptable breathing resistance requirements in accordance with the safety standards.

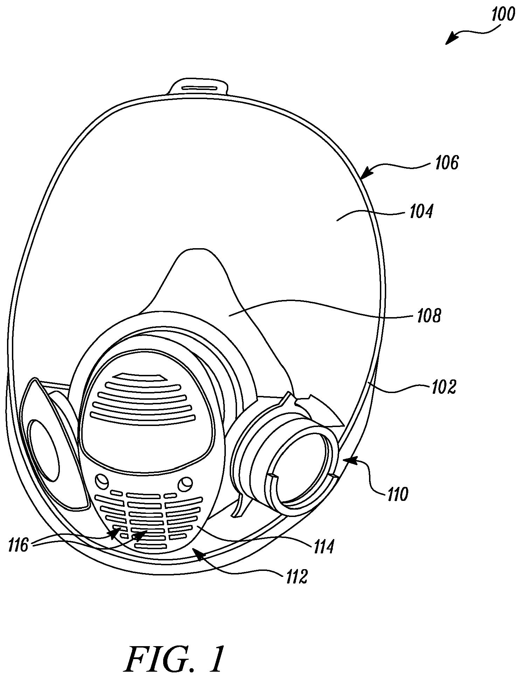

Referring now to Figures, FIG. 1 illustrates a perspective view of a respiratory mask 100, according to an embodiment of the present disclosure. In the illustrated embodiment of FIG. 1, the respiratory mask 100 is a full-face air-purifying respiratory mask. In some embodiments, the respiratory mask 100 is a positive pressure full face mask. Further, the respiratory mask 100 may be a part of an article of personal protective equipment (PPE), such as a respiratory protective equipment (RPE), a self-contained breathing apparatus (SCBA), a powered air purifying respirator (PAPR), a supplied air respirator (SAR), a pressure-demand supplied air respirator (PDSAR), and the like. The respiratory mask 100 may be used in hazardous environmental conditions.

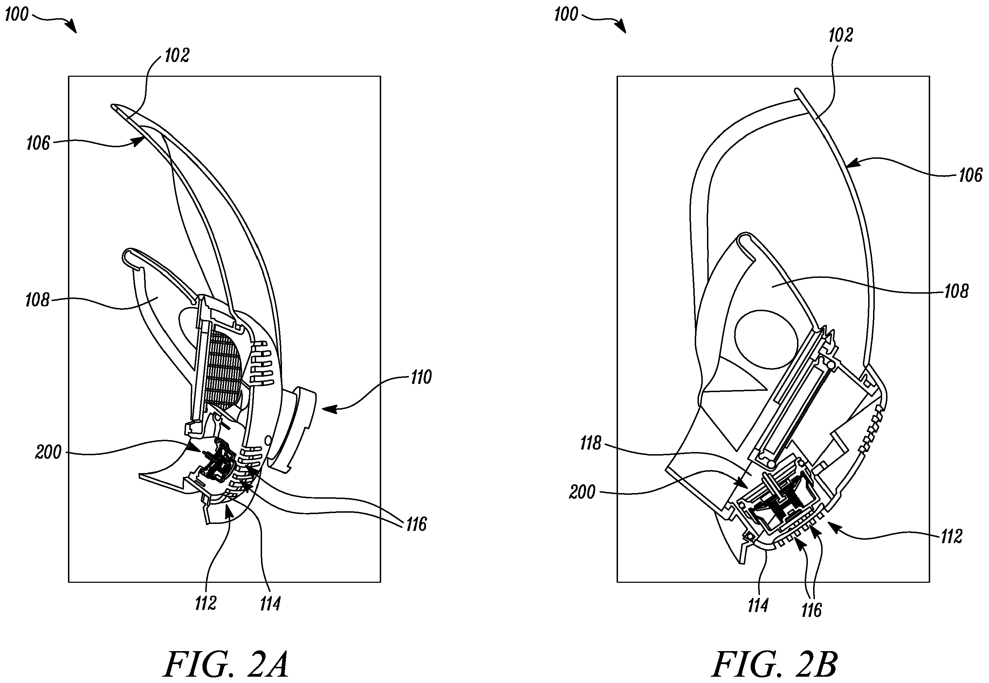

FIGS. 2A and 2B are partial perspective views of the respiratory mask 100. Referring to FIGS. 1, 2A, and 2B, the respiratory mask 100 includes a seal 102 for sealing against and around a face of a wearer (not shown). The respiratory mask 100 further includes a visor 104 in a frame 106 which includes the seal 102 for mounting the respiratory mask 100 over the face of the wearer. The seal 102 is provided to form with the face of the wearer a substantially air-tight seal to prevent ingress of contaminated air from the environment into an enclosed space defined between the respiratory mask 100 and the wearer's face. In the illustrated embodiment of FIG. 1, the respiratory mask 100 additionally includes an inner oronasal mask 108 which is intended to fit snugly over the mouth and nose of the wearer.

The respiratory mask 100 may be attachable to hoses for delivering oxygen or other breathable gas, as well as adapters to accept hoses, filters and/or regulators specific to particular functions or to be used in particular environments.

The respiratory mask 100 further includes a mask inlet 110 adapted to be placed in fluid communication with a supply of air. In some cases, the mask inlet 110 is adapted to be placed in fluid communication with an outlet of an air filter (not shown). In some cases, the mask inlet 110 is adapted to be placed in fluid communication with an outlet of a pressurized air supply from a compressor. In some cases, a demand valve or a regulator valve (not shown) is provided and mounted on the mask inlet 110 for supplying breathing air under pressure in the respiratory mask 100 (i. e., a positive pressure mask). The mask inlet 110 may include one or more inhalation valves through which the wearer inhales the air.

The respiratory mask 100 further includes a mask outlet 112 through which a wearer's exhaled breath is emitted. The respiratory mask 100 further includes a valve 200 fitted on the mask outlet 112. The valve 200 is fluidly disposed in the mask outlet 112. In the illustrated embodiment of FIGS. 2A and 2B, the valve 200 is an exhalation valve of the respiratory mask 100. Further, the valve 200 is a unidirectional valve. The valve 200 is adapted to open in response to increased pressure when the wearer exhales to allow the exhaled air to be rapidly purged from the respiratory mask 100. In some embodiments, the respiratory mask 100 further includes an outlet cover 114 at least partially enclosing the valve 200. The outlet cover 114 may be a perforated cover to protect the valve 200 disposed in the mask outlet 112. In some embodiments, the outlet cover 114 includes a plurality of openings 116 therethrough.

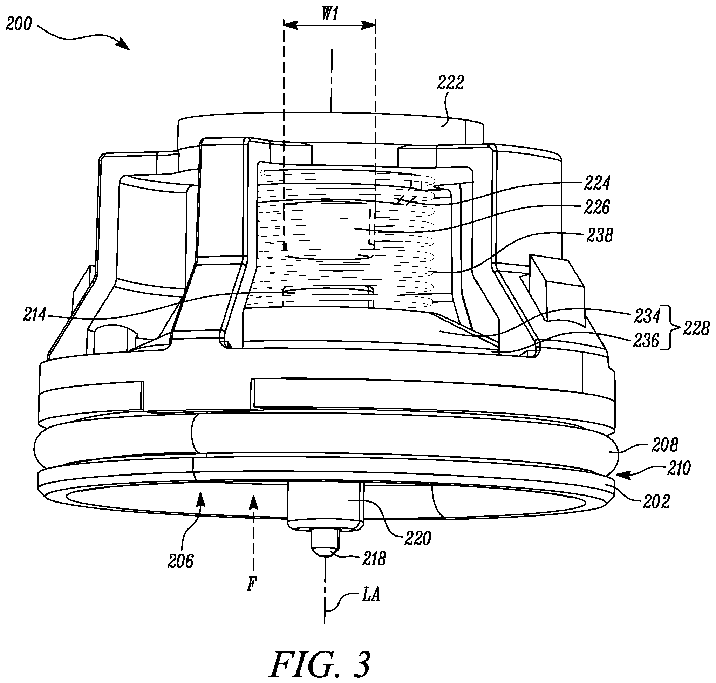

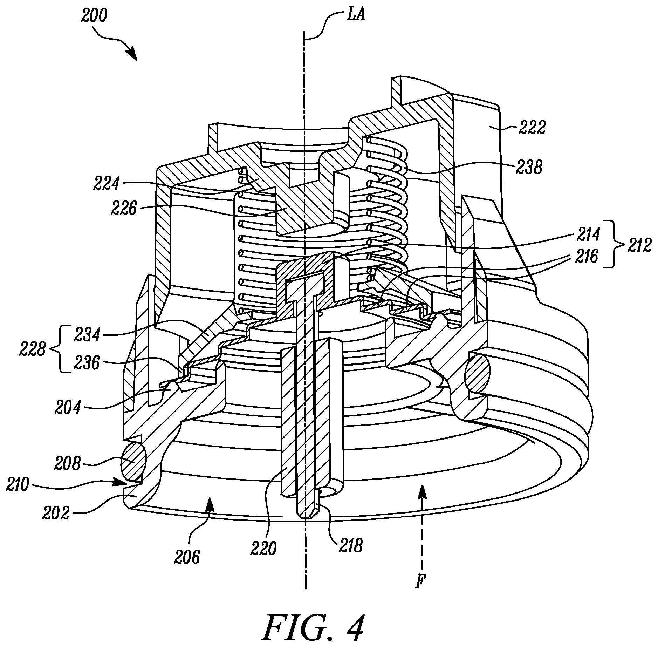

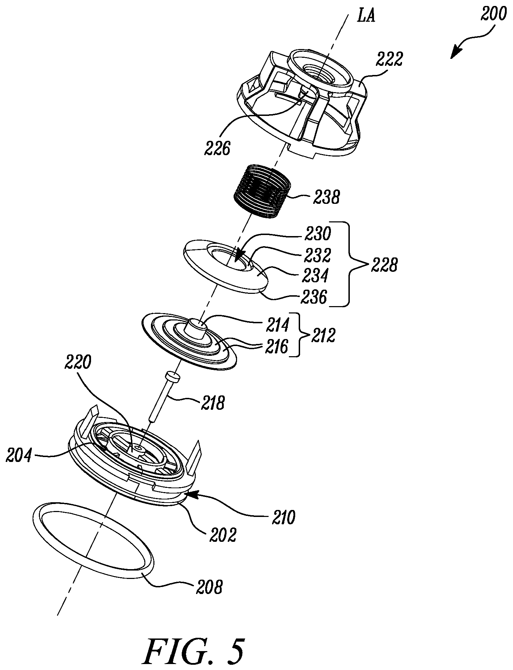

FIG. 3 is a perspective view of the valve 200, according to an embodiment of the present disclosure. FIG. 4 is a sectional front view of the valve 200 and FIG. 5 is an exploded view of the valve 200. Referring to FIGS. 3 to 5, the valve 200 includes a valve housing 202 including a valve seat 204 and an inlet 206. The inlet 206 is configured to receive the wearer's exhaled breath at an inlet pressure. The wearer's exhaled breath is depicted by a fluid flow F (shown in FIG. 3) via the inlet 206. The valve 200 further includes a sealing ring 208 in the form of a gasket. The valve housing 202 includes a groove 210 at least partially receiving the sealing ring 208 therein. The sealing ring 208 seals the valve 200 against a body 118 (shown in FIG. 2B) of the respiratory mask 100. The valve housing 202 and the valve seat 204 may be made from a lightweight plastic material. In some cases, the valve housing 202 may be manufactured by injection molding. In the illustrated embodiment of FIG. 5, the valve seat 204 is an annular projection.

The valve 200 further includes a valve flap 212 at least partially received within the valve housing 202. In some embodiments, the valve flap 212 is made of a deformable material. In some embodiments, the deformable material is an elastomer. Elastomers, which may be either thermoplastic elastomers or crosslinked rubbers, may include rubber materials such as polyisoprene, poly(styrene-butadiene) rubber, polybutadiene, butyl rubber, ethylene-propylene-diene rubber, ethylene-propylene rubber, nitrile rubber, polychloroprene rubber, chlorinated polyethylene rubber, chloro-sulphonated polyethylene rubber, polyacrylate elastomer, ethylene-acrylic rubber, fluorine containing elastomers, silicone rubber, polyurethane, epichlorohydrin rubber, propylene oxide rubber, polysulfide rubber, polyphosphazene rubber, and latex rubber, styrene-butadiene-styrene block copolymer elastomer, styrene-ethylene/butylene-styrene block copolymer elastomer, styrene-isoprene-styrene block copolymer elastomer, ultra-low density polyethylene elastomer, co-polyester ether elastomer, ethylene methyl acrylate elastomer ethylene vinyl acetate elastomer, and polyalphaolefin elastomers. Blends or mixtures of these materials may also be used.

The valve flap 212 may be constructed from materials that are deformed elastically over an actuation range of the valve flap 212. The valve flap 212 may be a monolayer flap constructed of only one material. Alternatively, the valve flap 212 may include two or more different materials dispersed throughout the bulk of the valve flap structure such that the composition of the valve flap 212 is uniform. The valve flap 212 may preferably be constructed from a material that has a modulus of elasticity that is preferably about 0.7 MPa or higher, more preferably about 0.8 MPa or higher, and potentially more preferably about 0.9 MPa or higher.

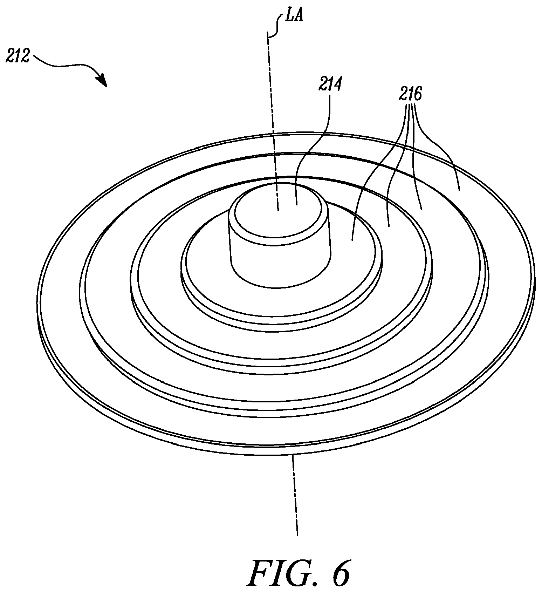

FIG. 6 is a perspective view of the valve flap 212, according to an embodiment of the present disclosure. Referring to FIGS. 4 to 6, the valve flap 212 includes a tubular projection 214 extending away from the valve seat 204 along a longitudinal axis LA. Thus, the tubular projection 214 extends axially relative to the longitudinal axis LA. The valve flap 212 further includes a plurality of annular steps 216 spaced apart from each other. In the illustrated embodiment of FIG. 6, the valve flap 212 includes four annular steps 216 in total. In some other embodiments, the valve flap 212 may include two annular steps 216 in total, or three annular steps 216 in total, or more than four annular steps 216 in total.

Referring again to FIGS. 3 to 5, the valve 200 further includes a pin 218 slidably received through the valve housing 202 and coupled to the tubular projection 214. The pin 218 and the valve flap 212 are together movable along the longitudinal axis LA relative to the valve seat 204. In other words, a displacement of the pin 218 along the longitudinal axis LA causes a corresponding movement of the valve flap 212 at least partially along the longitudinal axis LA. The tubular projection 214 defines an internal volume that receives a head of the pin 218 therein. The tubular projection 214 further includes a shoulder engaged with the head of the pin 218, thereby fixedly coupling the pin 218 to the tubular projection 214. The valve housing 202 further includes a tubular sleeve 220 configured to at least partially and slidably receive the pin 218 therethrough.

The valve 200 further includes a valve cage 222 coupled to the valve housing 202. In some embodiments, the valve cage 222 is coupled to the valve housing 202 via a push-fit connection arrangement. The valve cage 222 further includes an intermediate portion 224 extending along the longitudinal axis LA. For example, the valve housing 202 and the valve cage 222 may include complementary tongues and openings for providing a snap-fit coupling between the valve housing 202 and the valve cage 222.

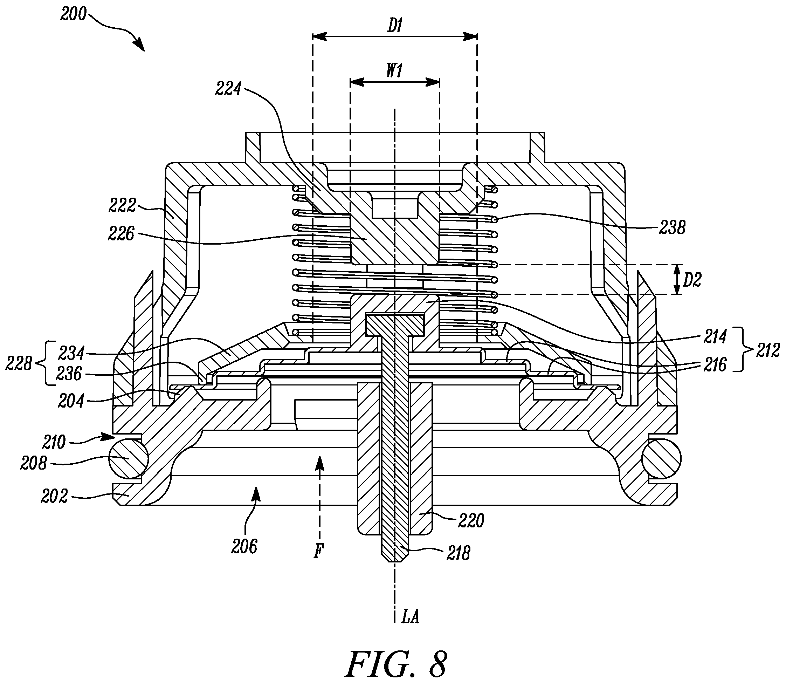

The valve 200 further includes a central limiter 226 coupled to the valve cage 222 and extending towards the tubular projection 214 along the longitudinal axis LA. Specifically, the intermediate portion 224 of the valve cage 222 is coupled to the central limiter 226. Therefore, the central limiter 226 extends from the valve cage 222 along the longitudinal axis LA. The central limiter 226 is stationary within the valve 200. In some embodiments, the central limiter 226 is a component that is separate from the valve cage 222. In some embodiments, the central limiter 226 is an integral part of the valve cage 222. In that case, the valve cage 222 including the central limiter 226 may be a single piece molded component. In some embodiments, the central limiter 226 includes a solid cylindrical component made of a rigid material. In some embodiments, the central limiter 226 may be made of a material comprising glass-filled nylon. The central limiter 226 has a maximum width W1 (also illustrated in FIG. 8).

The valve 200 further includes a cap 228 disposed on the valve flap 212 opposite to the valve seat 204. The cap 228 is engaged with the valve flap 212 and movable along the longitudinal axis LA. In some embodiments, the cap 228 is made of a rigid material having an elastic modulus greater than an elastic modulus of the deformable material of the valve flap 212. Therefore, in response to a given load, the valve flap 212 may be deformed and the cap 228 is not deformed.

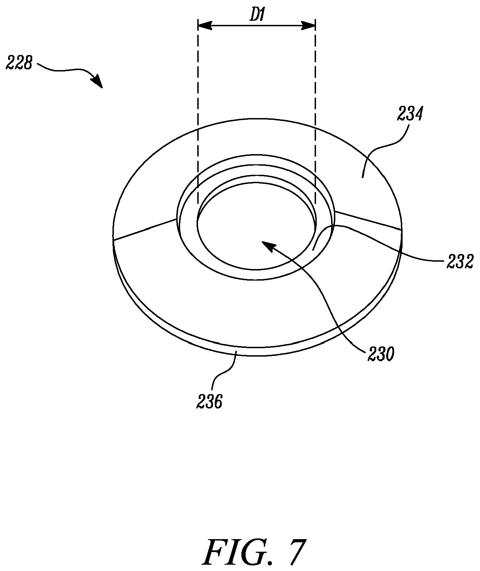

FIG. 7 is a perspective view of the cap 228, according to an embodiment of the present disclosure. Referring to FIGS. 3, 4, 5, and 7, the cap 228 includes an inner aperture 230 therethrough and an annular shoulder 232 surrounding the inner aperture 230. The inner aperture 230 defines an inner diameter D1 (also illustrated in FIG. 8) of the cap 228 and is configured to at least partially receive the tubular projection 214 therethrough. The inner diameter D1 of the cap 228 is greater than the maximum width W1 (illustrated in FIGS. 3 and 8) of the central limiter 226.

The cap 228 further includes a frustoconical portion 234 extending from the annular shoulder 232 and a cylindrical portion 236 disposed at an end of the frustoconical portion 234. The frustoconical portion 234 is proximal to the tubular projection 214 and the cylindrical portion 236 is distal to the tubular projection 214. The cylindrical portion 236 engages with the valve flap 212. Specifically, the cylindrical portion 236 of the cap 228 engages with one annular step 216 from the plurality of annular steps 216 of the valve flap 212. Further, the one annular step 216 from the plurality of annular steps 216 is at least partially disposed radially inwards of the cylindrical portion 236 of the cap 228.

Referring again to FIGS. 3 to 5, the valve 200 further includes a biasing member 238 disposed between and engaged with the cap 228 and the valve cage 222. Specifically, the annular shoulder 232 of the cap 228 engages with the biasing member 238. The biasing member 238 at least partially surrounds the intermediate portion 224 of the valve cage 222 and the central limiter 226. The biasing member 238 is configured to normally bias, via the cap 228, the valve flap 212 to a closed configuration (illustrated in FIGS. 4 and 8). In the illustrated embodiment of FIGS. 3 to 5, the biasing member 238 includes a coiled spring. In some embodiments, the biasing member 238 includes a compression spring with a spring rate of about 0.0149 N/mm, a wire diameter of about 0.417 mm, an outer diameter of about 13.72 mm, and a free length of about 28.8 mm. The compression spring may be made of a material comprising Stainless steel 316 (austenitic chromium-nickel stainless steel).

FIG. 8 is a sectional front view of the valve 200 in the closed configuration of the valve flap 212, according to an embodiment of the present disclosure. The valve flap 212 is sealingly engaged with the valve seat 204 in the closed configuration. Therefore, as the valve flap 212 is sealingly engaged with the valve seat 204 in the closed configuration, the valve flap 212 is configured to prevent fluid flow (i. e., the fluid flow F) through the valve 200 in the closed configuration. In some embodiments, in the closed configuration of the valve flap 212, a minimum distance D2 between the central limiter 226 and the tubular projection 214 of the valve flap 212 is nominally about 2.5 mm.

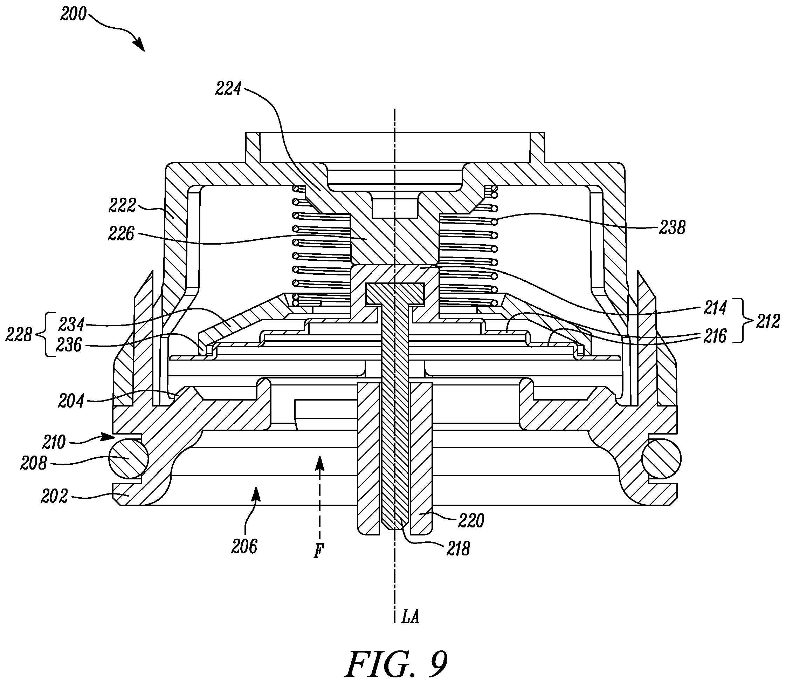

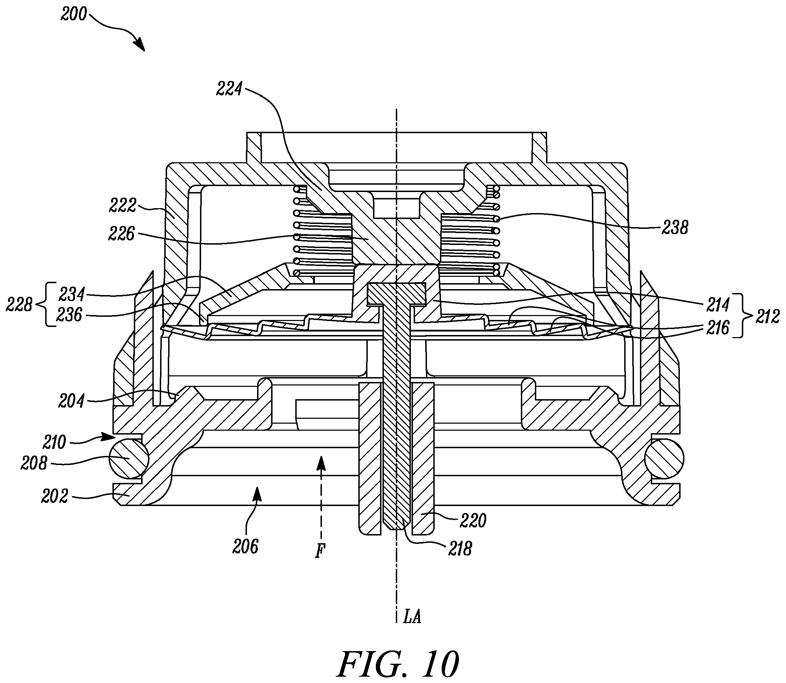

The valve flap 212 is disengaged from the valve seat 204 in a plurality of open configurations. The plurality of open configurations includes a first open configuration and a second open configuration. FIG. 9 is a sectional front view of the valve 200 in the first open configuration of the valve flap 212, according to an embodiment of the present disclosure. FIG. 10 is a sectional front view of the valve 200 in the second open configuration of the valve flap 212, according to an embodiment of the present disclosure. In each of the first open configuration (illustrated in FIG. 9) and the second open configuration (illustrated in FIG. 10), the valve flap 212 is disengaged from the valve seat 204. The valve flap 212 is further configured to allow fluid flow (i. e., the fluid flow F) through the valve 200 in each of the first open configuration and the second open configuration. Therefore, in each of the plurality of open configurations, the valve 200 is configured to allow discharge of fluid (i. e., the fluid flow F) through the mask outlet 112.

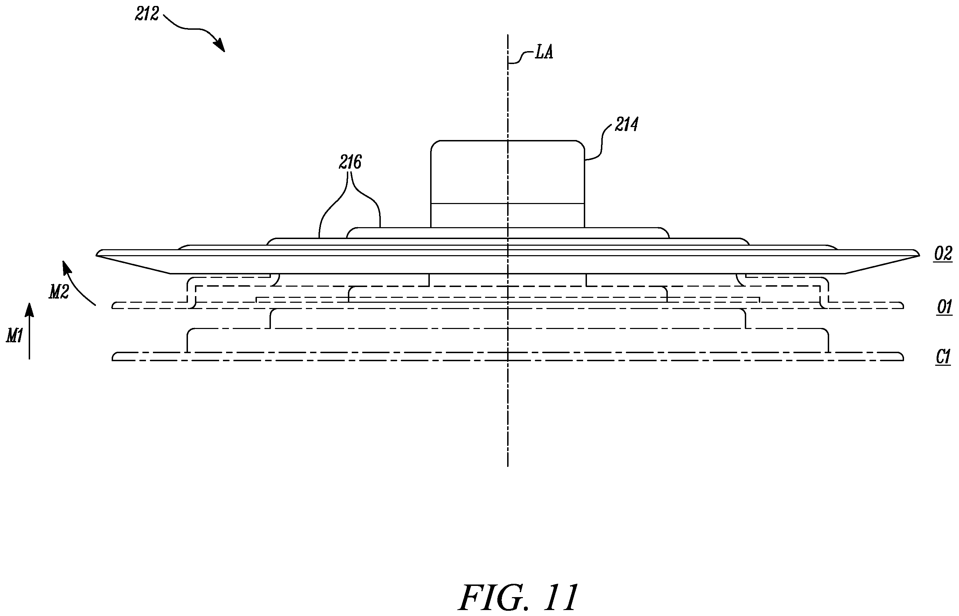

FIG. 11 shows the valve flap 212 in a closed position C1, a first open position O1, and a second open position O2 depicting the closed configuration (illustrated in FIG. 8), the first open configuration (illustrated in FIG. 8), and the second open configuration (illustrated in FIG. 8), respectively. The valve flap 212 in both the closed position C1 and the first open position O1 is shown dashed in FIG. 11 for illustrative purposes only.

With reference to FIGS. 8 to 11, upon receiving the wearer's exhaled breath (depicted by the fluid flow F), the inlet pressure is applied at the inlet 206 due to fluid flow. In response to the inlet pressure at the inlet 206 of the valve housing 202, the valve flap 212 moves linearly, along the longitudinal axis LA, from the closed configuration to the first open configuration against the biasing of the biasing member 238. In other words, in response to the inlet pressure applied on the valve 200, the valve flap 212 moves linearly, along the longitudinal axis LA, from the closed configuration to the first open configuration against the biasing of the biasing member 238.

A linear movement of the valve flap 212 from the closed configuration to the first open configuration is depicted by an arrow M1 (shown in FIG. 11). Therefore, in response to the inlet pressure at the inlet 206, the valve flap 212 moves linearly, along the longitudinal axis LA, from the closed position C1 to the first open position O1 against the biasing of the biasing member 238. Further, referring to FIGS. 8 and 9, the linear movement of the valve flap 212 from the closed configuration to the first open configuration causes a corresponding linear movement of the cap 228 along the longitudinal axis LA. In some embodiments, the inlet pressure is at least 3 mbar for moving the valve flap 212 to the plurality of open configurations against the biasing of the biasing member 238. An inlet pressure for moving the valve flap 212 to the second open configuration is greater than or equal to an inlet pressure for moving the valve flap 212 to the first open configuration.

Referring now to FIGS. 9 to 11, in the first open configuration (illustrated in FIG. 9) of the valve flap 212, the central limiter 226 engages with the tubular projection 214 of the valve flap 212 to prevent further movement of the tubular projection 214 along the longitudinal axis LA. As the central limiter 226 engages with the tubular projection 214 to prevent further movement of the tubular projection 214, the valve flap 212 transitions, in response to the inlet pressure, from the first open configuration to the second open configuration (illustrated in FIG. 10) in order to remain disengaged from the valve seat 204. In other words, the valve flap 212 transitions, in response to the inlet pressure, from the first open configuration to the second open configuration in order to allow fluid flow (i. e., the fluid flow F) through the valve 200.

The valve flap 212 at least partially deforms to transition from the first open configuration to the second open configuration. Specifically, as the elastic modulus of the rigid material of the cap 228 is greater than the elastic modulus of the deformable material of the valve flap 212, the engagement between the cap 228 and the valve flap 212 causes the valve flap 212 to at least partially deform in order to transition from the first open configuration to the second open configuration. A deformed state of the valve flap 212 is illustrated in FIG. 10. Further, the second open position O2 of the valve flap 212 depicts the deformed state (i. e., the second open configuration) of the valve flap 212.

In response to the inlet pressure, at least a portion of the valve flap 212 deforms and moves non-linearly during the transition of the valve flap 212 from the first open configuration to the second open configuration. Specifically, the plurality of annular steps 216 of the valve flap 212 deform and move non-linearly during the transition of the valve flap 212 from the first open configuration to the second open configuration. A non-linear movement of at least the portion of the valve flap 212 from the first open configuration to the second open configuration is depicted by an arrow M2 (shown in FIG. 11). In other words, in response to the inlet pressure, at least the portion of the valve flap 212 deforms and moves non-linearly during the transition of the valve flap 212 from the first open position O1 to the second open position O2. The non-linear movement of the valve flap 212 during the transition of the valve flap 212 from the first open configuration to the second open configuration causes a further movement of the cap 228, along the longitudinal axis LA, towards the central limiter 226.

Due to the non-linear movement of the valve flap 212 from the first open configuration to the second open configuration, an excitation frequency of the valve 200 due to the inlet pressure changes and becomes different from a natural frequency of the valve 200.

As the valve 200 is not excited at its natural frequency, the fluttering in the valve 200 may be reduced. The reduced fluttering may provide an improved comfort to the wearer donning the respiratory mask 100. Moreover, in contrast to some conventional positive pressure respiratory masks, the respiratory mask 100 may not be annoying for the wearer because of the reduced fluttering in the valve 200 (i. e., the exhalation valve).

To achieve the reduced fluttering in the valve 200, only one valve flap (i. e., the valve flap 212) is being used in the valve 200 in contrast to sone conventional respiratory masks comprising two valve flaps for achieving the reduced fluttering in an exhalation valve. In other words, excessive vibrations may be damped in the valve 200 by using only one valve flap (i. e., the valve flap 212). Moreover, as compared to some conventional valves with two valve flaps, the use of only one valve flap in the valve 200 may reduce a cost of manufacturing the valve 200 and the respiratory mask 100.

In contrast to a conventional technique for reducing the fluttering in a valve by increasing a size of that valve, there is no requirement for increasing a size of any component in the valve 200 of the present disclosure. Therefore, while reducing the fluttering in the valve 200, compact design requirements of the respirator mask 100 may also be met. This may further reduce a complexity in designing the valve 200 for the respiratory mask 100.

As compared to another conventional technique for reducing the fluttering in a valve by adjusting characteristics of a biasing member, there is no need to adjust the characteristics of the biasing member 238 for reducing the fluttering in the valve 200 of the present disclosure. In other words, to achieve the reduced fluttering in the valve 200, there may be no requirement to have the biasing member 238 with a relatively lower strength or a relatively higher strength. Therefore, the valve 200 may have the reduced fluttering along with an adequate strength of the biasing member 238.

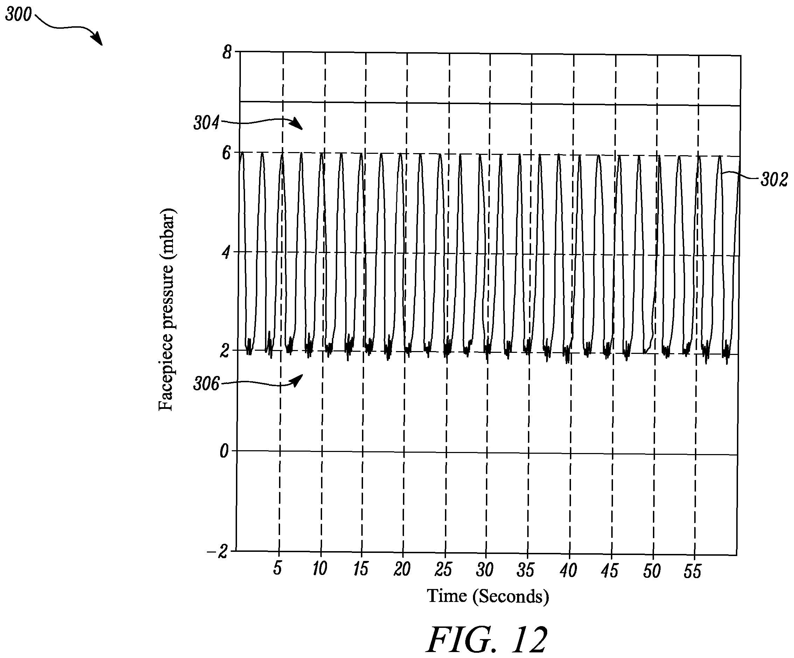

A pressure inside the respiratory mask 100 maintained by the demand valve (not shown) is also termed as "facepiece pressure". FIG. 12 is a graph 300 illustrating a plot 302 between the facepiece pressure and time, according to an exemplary embodiment of the present disclosure. The plot 302 depicts a variation in the facepiece pressure with time. For generating the plot 302, breathing air is supplied from a breathing machine at 25 strokes/min and 2 liters/stroke (i. e., normal breathing rate). The facepiece pressure is depicted in mbar on the ordinate. Time is depicted in seconds on the abscissa.

The plot 302 illustrates an inhale side 306 and an exhale side 304. In the graph 300, there are no sharp pressure peaks in the exhale side 304 of the plot 302. In other words, as the excitation frequency of the valve 200 (i. e., the exhalation valve) is different from the natural frequency, the plot 302 does not comprise any sharp pressure peak in the exhale side 304. Therefore, the reduced fluttering in the valve 200 depicted by absence of the sharp pressure peaks in the exhale side 304 is due to the fact that the excitation frequency of the valve 200 is different from its natural frequency.

Moreover, for the breathing rate at 25 strokes/min and 2 liters/stroke, the facepiece pressure (i. e., breathing resistance requirements) according to safety standards should be less than 7 mbar. As shown in the graph 300, the facepiece pressure is about 6 mbar and less than 7 mbar. For the breathing rate at 25 strokes/min and 2 liters/stroke, the reduced fluttering in the valve 200 along with conformation of the respiratory mask 100 to acceptable breathing resistance requirements may therefore provide an improved comfort to the wearer donning the respiratory mask 100.

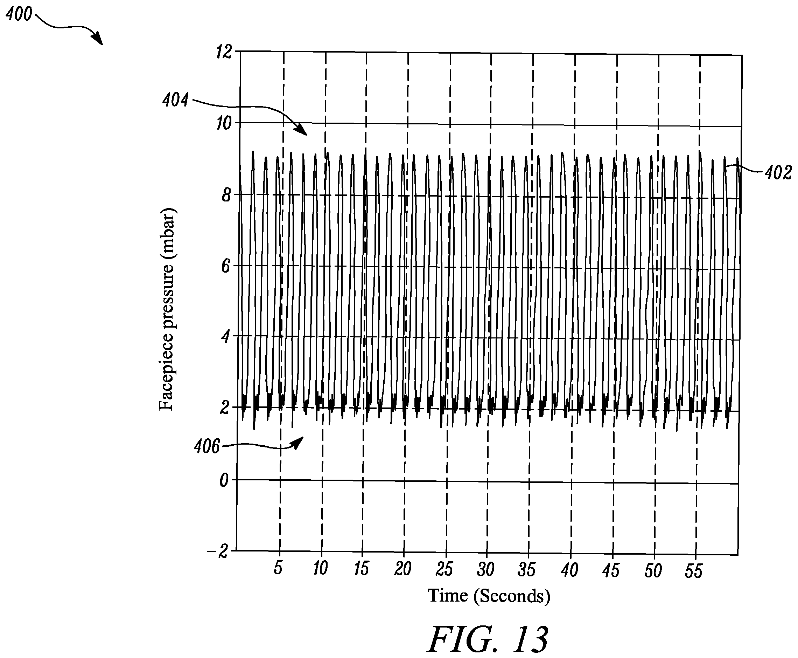

FIG. 13 is a graph 400 illustrating a plot 402 between the facepiece pressure and time, according to an exemplary embodiment of the present disclosure. The plot 402 depicts a variation in the facepiece pressure with time. For generating the plot 402, breathing air is supplied from a breathing machine at 40 strokes/min and 2.5 liters/stroke. The facepiece pressure is depicted in mbar on the ordinate. Time is depicted in seconds on the abscissa.

The plot 402 illustrates an inhale side 406 and an exhale side 404. In the graph 400, there are no sharp pressure peaks in the exhale side 404 of the plot 402. In other words, as the excitation frequency of the valve 200 (i. e., the exhalation valve) is different from the natural frequency, the plot 402 does not comprise any sharp pressure peak in the exhale side 404. Therefore, the reduced fluttering in the valve 200 depicted by absence of the sharp pressure peaks in the exhale side 404 is due to the fact that the excitation frequency of the valve 200 is different from its natural frequency.

Moreover, for the breathing rate at 40 strokes/min and 2.5 liters/stroke, the facepiece pressure (i. e., breathing resistance requirements) according to safety standards should be less than 10 mbar. As shown in the graph 400, the facepiece pressure is about 9 mbar and less than 10 mbar. For the breathing rate at 40 strokes/min and 2.5 liters/stroke, the reduced fluttering in the valve 200 along with conformation of the respiratory mask 100 to acceptable breathing resistance requirements may therefore provide an improved comfort to the wearer donning the respiratory mask 100.

### EXAMPLE

For the respiratory mask 100 (shown in FIG. 1), various tests were conducted to check the facepiece pressure on a breathing machine (e. g., Posicheck machine) at different breathing rates (at 40 strokes/min and 2.5 liters/stroke, and at 40 strokes/min and 2.5 liters/stroke). These tests were validated based on requirements according to safety standards, such as EN136. Further, these tests were conducted using the respiratory mask 100 in positive pressure mode attached to a SCBA pack. In each test, the biasing member 238 (shown in FIG. 3) in the valve 200 was used as a compression spring (with different characteristics for each test). Table 1 below shows results of the tests in forward facing configuration as well as in upward facing configuration of the respiratory mask 100.

**Table 1: Results of the tests to check the facepiece pressure using the respiratory mask 100 in positive pressure mode.**

| | Forward Facing | | | Upward Facing | | |
|---|---|---|---|---|---|---|
| Spring Sample no. | Exhalation Pressure (mbar) | Facepiece Pressure at 25 * 2 l/min (mbar) | Facepiece Pressure at 40 * 2.5 l/min (mbar) | Exhalation Pressure (mbar) | Facepiece Pressure at 25 * 2 l/min (mbar) | Facepiece Pressure at 40 * 2.5 l/min (mbar) |
| 1 | 4.2 | 5.2 | 8.5 | 4.5 | 5.6 | 8.9 |
| 2 | 4.1 | 5.5 | 8.9 | 4.6 | 5.9 | 9.2 |
| 3 | 4.3 | 5.6 | 8.5 | 4.7 | 5.8 | 8.7 |
| 4 | 4.5 | 5.5 | 8.7 | 4.9 | 5.8 | 8.9 |
| 5 | 4.4 | 5.6 | 8.8 | 4.7 | 6 | 9.1 |
| 6 | 4.6 | 5.7 | 8.8 | 5 | 6 | 9 |
| 7 | 4.4 | 5.7 | 8.8 | 4.8 | 6 | 9 |
| 8 | 4.4 | 5.6 | 8.6 | 4.9 | 6 | 8.9 |
| 9 | 4.2 | 6 | 8.7 | 4.6 | 5.6 | 9 |
| 10 | 4.3 | 5.5 | 8.6 | 4.5 | 5.8 | 8.8 |
| 11 | 4.2 | 5.2 | 8.6 | 4.6 | 5.6 | 8.8 |
| 12 | 4.4 | 5.5 | 8.7 | 4.9 | 5.8 | 8.9 |
| 13 | 4.3 | 5.8 | 8.6 | 4.7 | 5.9 | 8.8 |
| 14 | 4.7 | 6.1 | 8.8 | 5.1 | 6.3 | 9 |
| 15 | 4.3 | 5.5 | 8.9 | 4.5 | 5.9 | 9 |
| 16 | 4.3 | 5.7 | 9 | 4.7 | 5.8 | 9.2 |
| 17 | 4.2 | 5.4 | 8.7 | 4.8 | 5.7 | 8.9 |
| 18 | 4.6 | 5.7 | 8.7 | 4.9 | 6.2 | 8.8 |
| 19 | 4.3 | 5.4 | 8.9 | 4.7 | 5.7 | 9 |
| 20 | 4.2 | 5.2 | 8.8 | 4.5 | 5.7 | 9 |
| 21 | 4.4 | 5.9 | 8.5 | 4.8 | 6 | 8.9 |
| 22 | 4.1 | 5.2 | 8.6 | 4.5 | 5.5 | 8.9 |
| 23 | 4.1 | 5.2 | 8.6 | 4.3 | 5.5 | 8.9 |
| 24 | 4.5 | 6 | 9.1 | 4.9 | 6.2 | 9.3 |
| 25 | 4 | 5.2 | 8.4 | 4.3 | 5.5 | 8.8 |
| 26 | 4.5 | 5.3 | 8.8 | 4.9 | 5.8 | 9.1 |
| 27 | 4.2 | 5.3 | 8.9 | 4.7 | 5.7 | 9 |
| 28 | 4.4 | 5.5 | 8.8 | 4.8 | 5.8 | 9 |
| 29 | 4.5 | 5.6 | 9 | 4.9 | 5.9 | 9.2 |
| 30 | 4.3 | 5.3 | 8.6 | 4.7 | 5.9 | 8.9 |
| 31 | 4.1 | 6 | 8.2 | 4.4 | 6.3 | 8.4 |
| 32 | 4.3 | 5.4 | 8.6 | 4.7 | 5.8 | 8.7 |
| Minimum | 4 | 5.2 | 8.2 | 4.3 | 5.5 | 8.4 |
| Average | 4.321875 | 5.540625 | 8.709375 | 4.703125 | 5.84375 | 8.9375 |
| Maximum | 4.7 | 6.1 | 9.1 | 5.1 | 6.3 | 9.3 |

From the outcome of the results in Table 1, it was evident that the facepiece pressures (i. e., breathing resistance requirements) according to safety standards were acceptable in upward facing as well as in forward facing. For the breathing rate at 40 strokes/min and 2.5 liters/stroke, as the facepiece pressure was below 10 bar, the safety requirements according to EN136 were met. Further, for the breathing rate at 25 strokes/min and 2 liters/stroke, as the facepiece pressure was below 7 bar, the safety requirements according to EN136 were met.

Unless otherwise indicated, all numbers expressing feature sizes, amounts, and physical properties used in the specification and claims are to be understood as being modified by the term "about". Accordingly, unless indicated to the contrary, the numerical parameters set forth in the foregoing specification and attached claims are approximations that can vary depending upon the desired properties sought to be obtained by those skilled in the art utilizing the teachings disclosed herein.

## Claims

1. A valve (200) for a respiratory mask (100), the valve (200) comprising:
a valve housing (202) comprising a valve seat (204) and an inlet (206);
a valve flap (212) at least partially received within the valve housing (202), wherein the valve flap (212) is sealingly engaged with the valve seat (204) in a closed configuration and is disengaged from the valve seat (204) in a plurality of open configurations, the valve flap (212) comprising a tubular projection (214) extending away from the valve seat (204) along a longitudinal axis (LA), the plurality of open configurations comprising a first open configuration and a second open configuration;
a pin (218) slidably received through the valve housing (202) and coupled to the tubular projection (214), wherein the pin (218) and the valve flap (212) are together movable along the longitudinal axis (LA) relative to the valve seat (204);
a valve cage (222) coupled to the valve housing (202);
a central limiter (226) coupled to the valve cage (222) and extending towards the tubular projection (214) along the longitudinal axis (LA);
a cap (228) disposed on the valve flap (212) opposite to the valve seat (204), wherein the cap (228) is engaged with the valve flap (212) and movable along the longitudinal axis (LA); and
a biasing member (238) disposed between and engaged with the cap (228) and the valve cage (222), the biasing member (238) configured to normally bias, via the cap (228), the valve flap (212) to the closed configuration;
wherein, in response to an inlet pressure at the inlet (206) of the valve housing (202), the valve flap (212) moves linearly, along the longitudinal axis (LA), from the closed configuration to the first open configuration against the biasing of the biasing member (238), wherein the linear movement of the valve flap (212) from the closed configuration to the first open configuration causes a corresponding linear movement of the cap (228) along the longitudinal axis (LA); and
wherein, in the first open configuration of the valve flap (212), the central limiter (226) engages with the tubular projection (214) to prevent further movement of the tubular projection (214) along the longitudinal axis (LA), such that the valve flap (212) transitions, in response to the inlet pressure, from the first open configuration to the second open configuration in order to remain disengaged from the valve seat (204), and wherein the valve flap (212) at least partially deforms to transition from the first open configuration to the second open configuration.

2. The valve (200) of claim 1, further comprising a sealing ring (208), wherein the valve housing (202) comprises a groove (210) at least partially receiving the sealing ring (208) therein, such that the sealing ring (208) seals the valve (200) against a body (118) of the respiratory mask (100).

3. The valve (200) of claim 1, wherein the cap (228) comprises:
an inner aperture (230) therethrough, the inner aperture (230) defining an inner diameter (D1) of the cap (228) and configured to at least partially receive the tubular projection (214) therethrough, wherein the inner diameter (D1) of the cap (228) is greater than a maximum width (W1) of the central limiter (226); and
an annular shoulder (232) surrounding the inner aperture (230), wherein the annular shoulder (232) engages with the biasing member (238).

4. The valve (200) of claim 1, wherein, in response to the inlet pressure, at least a portion of the valve flap (212) deforms and moves non-linearly during the transition of the valve flap (212) from the first open configuration to the second open configuration, thereby causing a further movement of the cap (228), along the longitudinal axis (LA), towards the central limiter (226).

5. The valve (200) of claim 1, wherein the valve housing (202) further comprises a tubular sleeve (220) configured to at least partially and slidably receive the pin (218) therethrough.

6. A respiratory mask (100) comprising:
a seal (102) for sealing against and around a face of a wearer;
a mask inlet (110) adapted to be placed in fluid communication with a supply of air;
a mask outlet (112) through which a wearer's exhaled breath is emitted; and
the valve (200) of claim 1 fluidly disposed in the mask outlet (112), wherein the inlet (206) is configured to receive the wearer's exhaled breath at an inlet pressure, and wherein, in each of the plurality of open configurations, the valve (200) is configured to allow discharge of fluid through the mask outlet (112).

7. The respiratory mask (100) of claim 6, wherein the valve (200) is fitted on the mask outlet (112).

8. The respiratory mask (100) of claim 6, wherein the inlet pressure is at least 3 mbar for moving the valve flap (212) to the plurality of open configurations against the biasing of the biasing member (238).

9. The respiratory mask (100) of claim 6, wherein, in the closed configuration of the valve flap (212), a minimum distance between the central limiter (226) and the tubular projection (214) of the valve flap (212) is between 4 mm and 6 mm.

10. The respiratory mask (100) of claim 6, further comprising an outlet cover (114) at least partially enclosing the valve (200), the outlet cover (114) comprising a plurality of openings (116) therethrough.

## Patentansprüche

1. Ein Ventil (200) für eine Atemmaske (100), das Ventil (200) aufweisend:
ein Ventilgehäuse (202), aufweisend einen Ventilsitz (204) und einen Einlass (206);
eine Ventilklappe (212), die mindestens teilweise innerhalb des Ventilgehäuses (202) aufgenommen ist, wobei die Ventilklappe (212) in einer geschlossenen Konfiguration mit dem Ventilsitz (204) dichtend in Eingriff steht und in einer Mehrzahl von offenen Konfigurationen von dem Ventilsitz (204) gelöst ist, die Ventilklappe (212) aufweisend einen schlauchförmigen Vorsprung (214), der sich entlang einer Längsachse (LA) von dem Ventilsitz (204) weg erstreckt, die Mehrzahl von offenen Konfigurationen aufweisend eine erste offene Konfiguration und eine zweite offene Konfiguration;
einen Stift (218), der durch das Ventilgehäuse (202) verschiebbar aufgenommen und mit dem schlauchförmigen Vorsprung (214) gekoppelt ist, wobei der Stift (218) und die Ventilklappe (212) gemeinsam entlang der Längsachse (LA) relativ zu dem Ventilsitz (204) beweglich sind;
einen Ventilkorb (222), der mit dem Ventilgehäuse (202) gekoppelt ist;
einen zentralen Begrenzer (226), der mit dem Ventilkorb (222) gekoppelt ist und sich entlang der Längsachse (LA) zu dem schlauchförmigen Vorsprung (214) hin erstreckt;
eine Kappe (228), die auf der Ventilklappe (212) gegenüber dem Ventilsitz (204) eingerichtet ist, wobei die Kappe (228) mit der Ventilklappe (212) in Eingriff steht und entlang der Längsachse (LA) beweglich ist; und
ein Vorspannelement (238), das zwischen der Kappe (228) und dem Ventilkorb (222) eingerichtet ist und mit diesen in Eingriff steht, wobei das Vorspannelement (238) konfiguriert ist, um die Ventilklappe (212) über die Kappe (228) in die geschlossene Konfiguration normal vorzuspannen;
wobei sich die Ventilklappe (212) als Reaktion auf einen Einlassdruck an dem Einlass (206) des Ventilgehäuses (202) gegen die Vorspannung des Vorspannelements (238) entlang der Längsachse (LA) von der geschlossenen Konfiguration in die erste offene Konfiguration linear bewegt, wobei die lineare Bewegung der Ventilklappe (212) von der geschlossenen Konfiguration in die erste offene Konfiguration eine entsprechende lineare Bewegung der Kappe (228) entlang der Längsachse (LA) bewirkt; und
wobei in der ersten offenen Konfiguration der Ventilklappe (212) der zentrale Begrenzer (226) mit dem schlauchförmigen Vorsprung (214) in Eingriff steht, um eine weitere Bewegung des schlauchförmigen Vorsprungs (214) entlang der Längsachse (LA) derart zu verhindern, dass die Ventilklappe (212) als Reaktion auf den Einlassdruck von der ersten offenen Konfiguration in die zweite offene Konfiguration übergeht, um von dem Ventilsitz (204) gelöst zu bleiben, und
wobei sich die Ventilklappe (212) mindestens teilweise verformt, um von der ersten offenen Konfiguration in die zweite offene Konfiguration überzugehen.

2. Das Ventil (200) nach Anspruch 1, ferner aufweisend einen Dichtungsring (208), wobei das Ventilgehäuse (202) eine Nut (210) aufweist, die den Dichtungsring (208) mindestens teilweise derart aufnimmt, dass der Dichtungsring (208) das Ventil (200) gegenüber einem Körper (118) der Atemmaske (100) abdichtet.

3. Das Ventil (200) nach Anspruch 1, wobei die Kappe (228) aufweist:
eine innere Öffnung (230) hindurch, wobei die innere Öffnung (230) einen Innendurchmesser (D1) der Kappe (228) definiert und konfiguriert ist, um den schlauchförmigen Vorsprung (214) mindestens teilweise dadurch aufzunehmen, wobei der Innendurchmesser (D1) der Kappe (228) größer ist als eine maximale Breite (W1) des zentralen Begrenzers (226); und
eine ringförmige Schulter (232), die die innere Öffnung (230) umgibt, wobei die ringförmige Schulter (232) mit dem Vorspannelement (238) in Eingriff steht.

4. Das Ventil (200) nach Anspruch 1, wobei sich als Reaktion auf den Einlassdruck mindestens ein Abschnitt der Ventilklappe (212) während des Übergangs der Ventilklappe (212) von der ersten offenen Konfiguration in die zweite offene Konfiguration verformt und nichtlinear bewegt, wodurch eine weitere Bewegung der Kappe (228) entlang der Längsachse (LA) zu dem zentralen Begrenzer (226) hin bewirkt wird.

5. Das Ventil (200) nach Anspruch 1, wobei das Ventilgehäuse (202) ferner eine schlauchförmige Hülle (220) aufweist, die konfiguriert ist, um den Stift (218) mindestens teilweise und verschiebbar dadurch aufzunehmen.

6. Eine Atemmaske (100), aufweisend:
eine Dichtung (102) zum Abdichten gegen und um ein Gesicht eines Trägers;
einen Maskeneinlass (110), der geeignet ist, um mit einer Luftzufuhr in Flüssigkeitsverbindung platziert zu werden;
einen Maskenauslass (112), durch den ein ausgeatmeter Atem eines Trägers ausgestoßen wird; und
das Ventil (200) nach Anspruch 1, das flüssigkeitsleitend in dem Maskenauslass (112) eingerichtet ist, wobei der Einlass (206) konfiguriert ist, um die ausgeatmete Luft des Trägers bei einem Einlassdruck aufzunehmen, und wobei das Ventil (200) in jeder der Mehrzahl von offenen Konfigurationen konfiguriert ist, um eine Abgabe von Flüssigkeit durch den Maskenauslass (112) zu ermöglichen.

7. Die Atemmaske (100) nach Anspruch 6, wobei das Ventil (200) an dem Maskenauslass (112) angebracht ist.

8. Die Atemmaske (100) nach Anspruch 6, wobei der Einlassdruck mindestens 3 mbar beträgt, zum Bewegen der Ventilklappe (212) gegen die Vorspannung des Vorspannelements (238) in die Mehrzahl von offenen Konfigurationen.

9. Die Atemmaske (100) nach Anspruch 6, wobei in der geschlossenen Konfiguration der Ventilklappe (212) ein Mindestabstand zwischen dem zentralen Begrenzer (226) und dem schlauchförmigen Vorsprung (214) der Ventilklappe (212) zwischen 4 mm und 6 mm beträgt.

10. Die Atemmaske (100) nach Anspruch 6, ferner aufweisend eine Auslassabdeckung (114), die das Ventil (200) mindestens teilweise umschließt, die Auslassabdeckung (114) aufweisend eine Mehrzahl von Öffnungen (116) dadurch.

## Revendications

1. Soupape (200) pour un masque respiratoire (100), la soupape (200) com prenant :
un boîtier de soupape (202) comprenant un siège de soupape (204) et une entrée (206) ;
un clapet de soupape (212) au moins partiellement reçu au sein du boîtier de soupape (202), dans laquelle le clapet de soupape (212) est engagé de manière étanche avec le siège de soupape (204) dans une configuration fermée et est désengagé du siège de soupape (204) dans une pluralité de configurations ouvertes, le clapet de soupape (212) comprenant une saillie tubulaire (214) s'étendant à l'écart du siège de soupape (204) le long d'un axe longitudinal (LA), la pluralité de configurations ouvertes comprenant une première configuration ouverte et une seconde configuration ouverte ;
une goupille (218) reçue de manière coulissante à travers le boîtier de soupape (202) et accouplée à la saillie tubulaire (214), dans laquelle la goupille (218) et le clapet de soupape (212) sont conjointement mobiles le long de l'axe longitudinal (LA) par rapport au siège de soupape (204) ;
une cage de soupape (222) accouplée au boîtier de soupape (202) ;
un limiteur central (226) accouplé à la cage de soupape (222) et s'étendant vers la saillie tubulaire (214) le long de l'axe longitudinal (LA) ;
une coiffe (228) disposée sur le clapet de soupape (212) à l'opposé du siège de soupape (204), dans laquelle la coiffe (228) est engagée avec le clapet de soupape (212) et est mobile le long de l'axe longitudinal (LA) ; et
un élément de sollicitation (238) disposé entre la coiffe (228) et la cage de soupape (222) et engagé avec eux, l'élément de sollicitation (238) étant conçu pour solliciter normalement, par l'intermédiaire de la coiffe (228), le clapet de soupape (212) dans la configuration fermée ;
dans laquelle, en réponse à une pression d'entrée au niveau de l'entrée (206) du boîtier de soupape (202), le clapet de soupape (212) se déplace de manière linéaire, le long de l'axe longitudinal (LA), de la configuration fermée à la première configuration ouverte contre la sollicitation de l'élément de sollicitation (238), dans laquelle le mouvement linéaire du clapet de soupape (212) de la configuration fermée à la première configuration ouverte entraîne un mouvement linéaire correspondant de la coiffe (228) le long de l'axe longitudinal (LA) ; et
dans laquelle, dans la première configuration ouverte du clapet de soupape (212), le limiteur central (226) s'engage avec la saillie tubulaire (214) pour empêcher tout mouvement supplémentaire de la saillie tubulaire (214) le long de l'axe longitudinal (LA), de telle sorte que le clapet de soupape (212) passe, en réponse à la pression d'entrée, de la première configuration ouverte à la seconde configuration ouverte afin de rester désengagé du siège de soupape (204), et
dans laquelle le clapet de soupape (212) se déforme au moins partiellement pour passer de la première configuration ouverte à la seconde configuration ouverte.

2. Soupape (200) selon la revendication 1, comprenant en outre un anneau d'étanchéité (208), dans laquelle le boîtier de soupape (202) comprend une rainure (210) recevant au moins partiellement l'anneau d'étanchéité (208) à l'intérieur de celle-ci, de telle sorte que l'anneau d'étanchéité (208) assure une étanchéité de la soupape (200) contre un corps (118) du masque respiratoire (100).

3. Soupape (200) selon la revendication 1, dans laquelle la coiffe (228) com prend :
une ouverture intérieure (230) à travers celle-ci, l'ouverture intérieure (230) définissant un diamètre intérieur (D1) de la coiffe (228) et étant conçue pour recevoir au moins partiellement la saillie tubulaire (214) à travers celle-ci, dans laquelle le diamètre intérieur (D1) de la coiffe (228) est supérieur à une largeur maximale (W1) du limiteur central (226) ; et
un épaulement annulaire (232) entourant l'ouverture intérieure (230), dans laquelle l'épaulement annulaire (232) est engagé avec l'élément de sollicitation (238).

4. Soupape (200) selon la revendication 1, dans laquelle, en réponse à la pression d'entrée, au moins une partie du clapet de soupape (212) se déforme et se déplace de manière non linéaire pendant le passage du clapet de soupape (212) de la première configuration ouverte à la seconde configuration ouverte, entraînant de ce fait un mouvement supplémentaire de la coiffe (228), le long de l'axe longitudinal (LA), vers le limiteur central (226).

5. Soupape (200) selon la revendication 1, dans laquelle le boîtier de soupape (202) comprend en outre un manchon tubulaire (220) conçu pour recevoir au moins partiellement et de manière coulissante la goupille (218) à travers celui-ci.

6. Masque respiratoire (100) comprenant :
un joint (102) pour assurer une étanchéité contre et autour d'un visage d'un porteur ;
une entrée de masque (110) adaptée pour être placée en com m unication fluidique avec une alimentation en air ;
une sortie de masque (112) à travers laquelle le souffle expiré d'un porteur est émis ; et
la soupape (200) selon la revendication 1 étant disposée de manière fluidique dans la sortie de masque (112), dans lequel l'entrée (206) est conçue pour recevoir le souffle expiré du porteur à une pression d'entrée, et dans lequel, dans chacune de la pluralité de configurations ouvertes, la soupape (200) est conçue pour permettre l'évacuation de fluide à travers la sortie de masque (112).

7. Masque respiratoire (100) selon la revendication 6, dans lequel la soupape (200) est montée sur la sortie de masque (112).

8. Masque respiratoire (100) selon la revendication 6, dans lequel la pression d'entrée est d'au moins 3 mbar pour déplacer le clapet de soupape (212) vers la pluralité de configurations ouvertes contre la sollicitation de l'élément de sollicitation (238).

9. Masque respiratoire (100) selon la revendication 6, dans lequel, dans la configuration fermée du clapet de soupape (212), une distance minimale entre le limiteur central (226) et la saillie tubulaire (214) du clapet de soupape (212) est comprise entre 4 mm et 6 mm.

10. Masque respiratoire (100) selon la revendication 6, comprenant en outre un couvercle de sortie (114) renfermant au moins partiellement la soupape (200), le couvercle de sortie (114) comprenant une pluralité d'ouvertures (116) à travers celui-ci.
